# EUROPEAN PATENT APPLICATION

(11) **EP 4 105 871 A1**
(43) Date of publication of application: **21.12.2022**
(21) Application number: 21753946.9
(22) Date of filing: 09.02.2021
(51) Int. Cl.: G06Q 30/06, G06Q 50/30, G06Q 40/04, G06Q 20/16, G06Q 20/14

(54) **SYSTEM AND METHOD FOR PROVIDING GIFTING SERVICE BETWEEN COUNTRIES**

(30) Priority: 13.02.2020 KR 20200017848; 08.02.2021 KR 20210017731
(71) Applicant: Sodacrew Inc., Gyeonggi-do 13488 (KR)
(72) Inventor: LEE, Ji Soo, Seoul 04570 (KR); KIM, Jong Hoon, Hwaseong-si, Gyeonggi-do 18392 (KR)
(74) Representative: AWA Sweden AB
(86) International application number: PCT/KR2021/001712
(87) International publication number: WO 2021/162411

(57) **Abstract**

Provided are a system and a method for providing a gifting service between a first country and a second country. The method for providing a gifting service between a first country and a second country may comprise the steps in which: a service server of a first country receives a gift-giving request from a buyer client of the first country; the service server of the first country provides a plurality of product lists for each brand to the buyer client of the first country; the service server of the first country receives a selection of a specific product from the plurality of product lists from the buyer client of the first country; the service server of the first country requests payment for the specific product to the buyer client of the first country; and upon completion of payment, the service server of the first country requests a gift-giving of the specific product to a service server of a second country.

## Description

### [Technical Field]

The present invention relates to a system and method for providing a gifting service between countries.

### [Background Art]

With the development of mobile communication technology, as most people carry mobile communication terminals, various additional services using mobile communication terminals are being developed and used.

Among various supplementary services, a gifticon service is a representative supplementary service. The gifticon service allows users to send or receive gifts using specific mobile communication terminals through wired/wireless Internet, breaking away from a method of sending or receiving only text messages between the mobile communication terminals. Specifically, in the gifticon service, a user selects a product to gift and inputs a number of a mobile communication terminal of a recipient to whom the product is to be gifted. Then, a gifticon including a barcode image on which information on a sender and information on the product are recorded is transmitted to the mobile communication terminal of the recipient. The recipient saves the gifticon and then visits an offline store to exchange the gifticon for the product.

However, the conventional gifticon service is limited to use only within a country. That is, when a user residing in a specific country wants to give a gift to an acquaintance residing in another country abroad, the user cannot send the gift easily with a gift card or the like, and has no choice but to use overseas delivery, which causes inconvenience in terms of time and expenses.

### [Document of Related Art]

### [Patent Document]

Korean Patent Application Publication No. 10-2007-0090657, Published on September 6, 2007

### [Disclosure]

### [Technical Problem]

The present invention is directed to providing a system and method for providing a gifting service between countries.

Objects of the present invention are not limited to the above-described object and other objects that are not described may be clearly understood by those skilled in the art from the following descriptions.

### [Technical Solution]

According to an aspect of the present disclosure, a method of providing a gifting service between a first country and a second country, which is performed by a computer comprises receiving, by a service server of a first country, a gifting request from a buyer client of the first country, providing, by the service server of the first country, a plurality of product lists for each brand to the buyer client of the first country, receiving, by the service server of the first country, a selection of a specific product from among the plurality of product lists from the buyer client of the first country, making, by the service server of the first country, a request for payment for the specific product to the buyer client of the first country; and upon completion of the payment, making , by the service server of the first country, a request to gift the specific product to a service server of the second country, wherein the service server of the first country and the service server of the second country perform settlement every predetermined period, on the basis of the gifting request made by the service server of the first country to the service server of the second country for the predetermined period.

According to the aspect of the present disclosure, in the making of the request for the payment for the specific product, the service server of the first country makes a request for payment in a currency of the first country for the amount of the specific product being sold in the second country to the buyer client of the first country, and the amount of the specific product is determined in consideration of an exchange rate at a time point when the payment is requested.

According to the aspect of the present disclosure, the service server of the first country uses an overseas payment network to allow the buyer client of the first country to perform payment for the specific product being sold in the second country.

According to the aspect of the present disclosure, the making of the request to gift the specific product includes providing, by the service server of the first country, information on the payment for the specific product and information on a recipient who will receive the specific product to the service server of the second country.

According to the aspect of the present disclosure, the service server of the first country provides a notification to the buyer client of the first country when a current exchange rate falls to a predetermined reference value or less.

According to other aspect of the present disclosure, a method of providing a gifting service between a first country and a second country, which is performed by a computer comprises receiving, by a service server of a second country, a gifting request for a specific product together with information on payment for the specific product and information on a recipient who will receive the specific product from a service server of a first country; and providing, by the service server of the second country, a gift card for the specific product to a recipient client of the second country, on the basis of the information on the payment and the information on the recipient, wherein the service server of the first country and the service server of the second country perform settlement every predetermined period, on the basis of the gifting request made by the service server of the first country to the service server of the second country for the predetermined period.

According to other aspect of the present disclosure, the method further comprises when the settlement is performed, making , by the service server of the second country, a request for remittance for a total amount to the service server of the first country, on the basis of the plurality of pieces of information on payment received from the service server of the first country for the predetermined period; and changing, by the service server of the second country, the total amount remitted from the service server of the first country from a currency of the first country into a currency of the second country.

According to other aspect of the present disclosure, the service server of the second country purchases gift cards of products for each brand in advance, and when the service server of the second country receives the gifting request for the specific product from the service server of the first country, provides a gift card corresponding to the corresponding specific product to the recipient client of the second country.

According to another of the present disclosure, A computer program which is combined with a computer and is stored in a computer-readable recording medium to execute the method of providing the gifting service between the first country and the second country.

According to another of the present disclosure, a system for providing a gifting service between a first country and a second country comprises a service server of a first country, which is configured to provide a plurality of product lists for each brand to a buyer client of the first country, receive a gifting request for a specific product selected from among the plurality of product lists, make a request for payment for the specific product to the buyer client of the first country, and upon completion of the payment, request gifting of the specific product; and a service server of a second country, which is configured to receive the gifting request for the specific product from the service server of the first country and provide a gift card for the specific product to a recipient client of the second country on the basis of information on the payment and information on a recipient, wherein the service server of the first country uses an overseas payment network to allow the buyer client of the first country to perform payment for the specific product being sold in the second country, the service server of the second country purchases gift cards of products for each brand in advance, and when the service server of the second country receives the gifting request for the specific product from the service server of the first country, provides a gift card corresponding to the corresponding specific product to the recipient client of the second country, and the service server of the first country and the service server of the second country perform settlement every predetermined period, on the basis of the gifting request made by the service server of the first country to the service server of the second country for the predetermined period.

Other specific details of the present invention are included in the detailed description and the accompanying drawings.

### [Advantageous Effects]

As described above, according to the present invention, by giving, by a buyer residing in a first country, a gift card to a recipient residing in a second country through a mobile terminal, money and time can be saved.

Further, by performing settlement every predetermined period between a service server of the first country and a service server of the second country, the service server of the second country can pay the amount that the service server of the second country has completed the gifting one time in response to a request of the service server of the first country for a predetermined period, and thus fees associated with currency exchange can be reduced.

Effects of the present invention are not limited to the above-described effects and other unmentioned effects may be clearly understood by those skilled in the art from the following descriptions.

### [Description of Drawings]

FIG. 1 is a configuration diagram of a system for providing a gifting service between countries according to an embodiment of the present invention.
FIG. 2 is a flowchart of a method of providing a gifting service in terms of the first country according to an embodiment of the present invention.
FIGS. 3 to 7 are exemplary diagrams of a screen of a buyer client of the first country according to the embodiment of the present invention.
FIG. 8 is a flowchart of a method of providing a gifting service in terms of the second country according to an embodiment of the present invention.
FIG. 9 is an exemplary diagram of a screen of a recipient client of the second country according to the embodiment of the present invention.

### [Modes of the Invention]

Advantages and features of the present invention and methods for achieving them will be made clear from embodiments described in detail below with reference to the accompanying drawings. However, the present invention may be embodied in many different forms and should not be construed as being limited to the embodiments set forth herein. Rather, these embodiments are provided so that this disclosure will be thorough and complete and will fully convey the scope of the present invention to those of ordinary skill in the technical field to which the present invention pertains. The present invention is defined by the claims.

Meanwhile, terms used herein are for the purpose of describing the embodiments and are not intended to limit the present invention. In this specification, the singular forms include the plural forms unless the context clearly indicates otherwise. It will be understood that the terms "comprise" and/or "comprising," when used herein, specify some stated components but do not preclude the presence or addition of one or more other components. Throughout this specification, like reference numerals refer to like components, and the term "and/or" includes any and all combinations of one or more referents. It will be understood that, although the terms "first," "second," etc. may be used herein to describe various components, these components should not be limited by these terms. These terms are only used to distinguish one component from another. Therefore, a first component described below may be a second component within the technological scope of the present invention.

Unless otherwise defined, all terms (including technical and scientific terms) used herein can be used as is customary in the art to which the present invention belongs. Also, it will be further understood that terms, such as those defined in commonly used dictionaries, will not be interpreted in an idealized or overly formal sense unless expressly so defined herein.

In the present invention, a gifting service is a service that allows a user residing in a first country to rapidly and inexpensively give a gift to an acquaintance residing in a second country abroad. Therefore, a service provider that provides the gifting service establishes a corporation in each of a first country and a second country, and implements the gifting service between different countries through a server operated by each corporation. That is, a service server of the first country and a service server of the second country, which are disclosed in the present invention, are operated by the same service provider.

Currently, in some countries, overseas payment is impossible, and a system and method for providing a gifting service between countries according to an embodiment of the present invention may be used for a gifting service from a country where overseas payment is impossible to another country. Even in the case in which overseas payment is possible, when the address of the overseas resident is unclear, or it is difficult to know which gift/exchangeable gift the overseas resident prefers, the system and method for providing a gifting service between countries according to the embodiment of the present invention may be used.

Hereinafter, embodiments of the present invention will be described in detail with reference to the accompanying drawings.

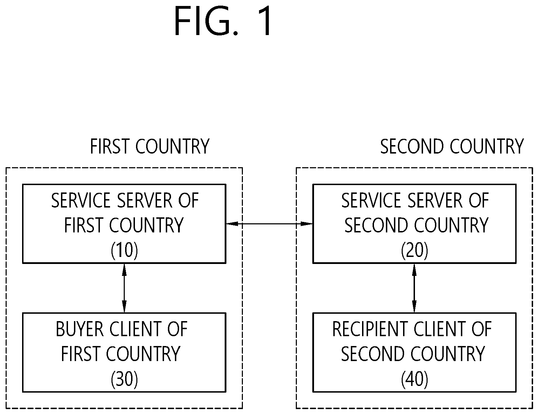

FIG. 1 is a configuration diagram of a system for providing a gifting service between countries according to an embodiment of the present invention.

Referring to FIG. 1, the system for providing the gifting service includes a service server 10 of a first country, a service server 20 of a second country, a buyer client 30 of the first country, and a recipient client 40 of the second country.

When the service server 10 of the first country receives a gifting request from the buyer client 30 of the first country, the service server 10 of the first country performs payment for the corresponding request.

Thereafter, the service server 10 of the first country transmits a gifting request for a product for which payment has been completed to the service server 20 of the second country by transmitting and receiving data to and from the service server 20 of the second country.

Thereafter, the service server 20 of the second country provides a gift card corresponding to the corresponding product to the recipient client 40 of the second country.

A service provider has partnered with various brands selling products in the second country and allows a buyer in the first country to gift a desired product from among an affiliated brand's products to a recipient in the second country. That is, the buyer in the first country may purchase a product of a brand in the second country that is not sold in the first country and gift the product to the recipient in the second country.

The service provider provides a gifting service to the buyer in the first country and the recipient in the second country through an overseas gifting platform. That is, the service provider provides the service in the form of an app or web to the buyer client 30 of the first country through the service server 10 of the first country, and provides the service in the form of an app or web to the recipient client 40 of the second country through the service server 20 of the second country. Here, although the recipient in the second country is described as a user who uses the gifting service, the recipient in the second country may not be a user of the gifting service.

The first country is a country in which the buyer, who purchases a product and requests to gift the product, resides, and may be, for example, the United States, but the present invention is not limited thereto. The second country is a country in which the recipient, who receives a gift card from the buyer, resides, and may be, for example, Korea, but the present invention is not limited thereto.

The buyer client 30 of the first country and the recipient client 40 of the second country are computer devices or telecommunication devices such as smartphones, tablet computers, personal digital assistants (PDAs), laptop computers, desktop computers, servers, etc. which are operated by the buyer and the recipient.

Hereinafter, a process in which the gifting request is made by the service server 10 of the first country and the buyer client 30 of the first country will be described in terms of the first country.

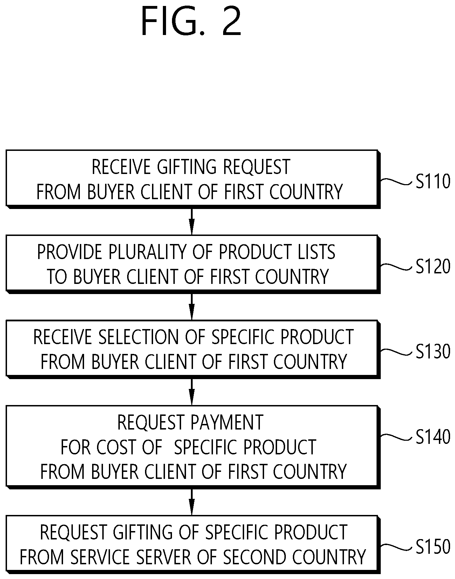

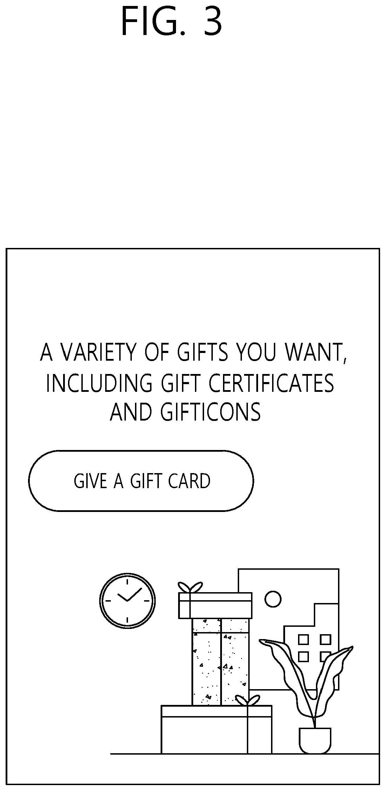

FIG. 2 is a flowchart of a method of providing a gifting service in terms of the first country according to an embodiment of the present invention. FIGS. 3 to 7 are exemplary diagrams of a screen of a buyer client of the first country according to the embodiment of the present invention.

Referring to FIG. 2, a service server 10 of the first country receives a gifting request from a buyer client 30 of the first country (S110).

A buyer in the first country logs in a web or app of an overseas gifting service provided by a service provider through the buyer client 30 of the first country, and then selects "Give a gift card" as illustrated in FIG. 3.

Next, referring to FIG. 2 again, the service server 10 of the first country provides a plurality of product lists to the buyer client 30 of the first country (S120). Here, the plurality of product lists are product lists for each brand being sold in the second country.

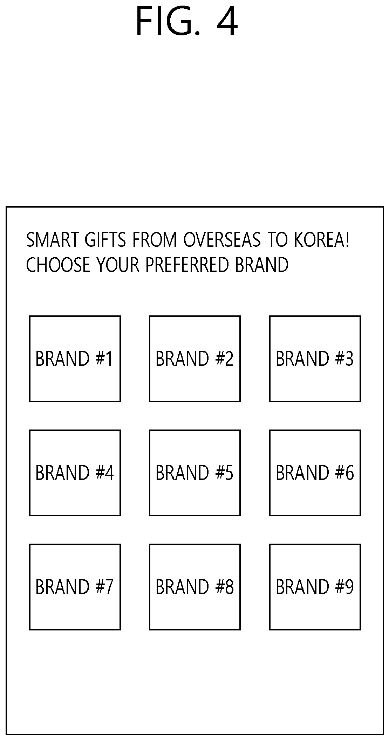

That is, the service server 10 of the first country provides a plurality of brands of the second country with which the service provider is affiliated on a screen of the buyer client 30 of the first country, as illustrated in FIG. 4, and allows the buyer in the first country to select a specific brand.

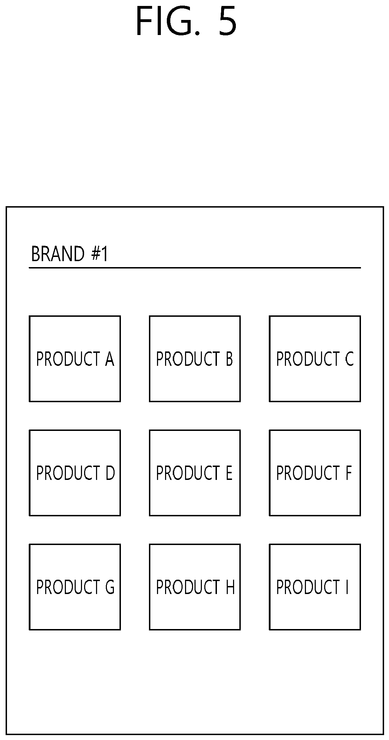

When the buyer in the first country selects brand #1 from among the plurality of brands, the service server 10 of the first country provides a list of products being sold by brand #1 on the screen of the buyer client 30 of the first country, as illustrated in FIG. 5.

According to an embodiment, the service server 10 of the first country may receive information on a recipient from the buyer in the first country and provide a gift recommendation on the basis of location information or preference information of the recipient.

As an example, when the buyer in the first country inputs location information on a region where the recipient in the second country lives, the service server 10 of the first country may recommend a gift to the buyer in the first country on the basis of information on stores located near the region where the recipient in the second country lives through a location-based service (LBS). For example, in the case in which stores of brands A, B, and C among the affiliated brands are located near the region where the recipient in the second country lives, the service server 10 of the first country may recommend products of brands A, B, and C.

As another example, when the buyer in the first country inputs preference information of the recipient in the second country, the service server 10 of the first country may recommend gifts to the buyer in the first country on the basis of the preference information. For example, when it is determined through the preference information that the recipient in the second country has great interest in cosmetics, the service server 10 of the first country may recommend products of cosmeticsrelated brands among the affiliated brands.

Next, referring to FIG. 2 again, the service server 10 of the first country receives a selection of a specific product from among the plurality of product lists from the buyer client 30 of the first country (S130).

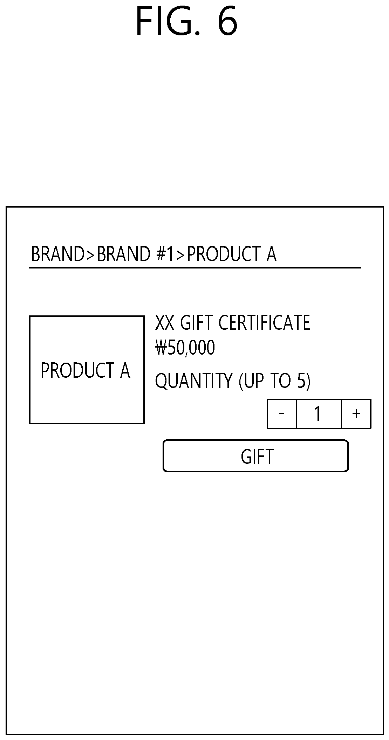

Further, the buyer in the first country may select the quantity of the specific product. As illustrated in FIG. 6, the buyer in the first country selects "1" as the quantity of product A of brand #1 and then selects "Gift."

Next, the service server 10 of the first country makes a request for payment for the specific product to the buyer client 30 of the first country (S140).

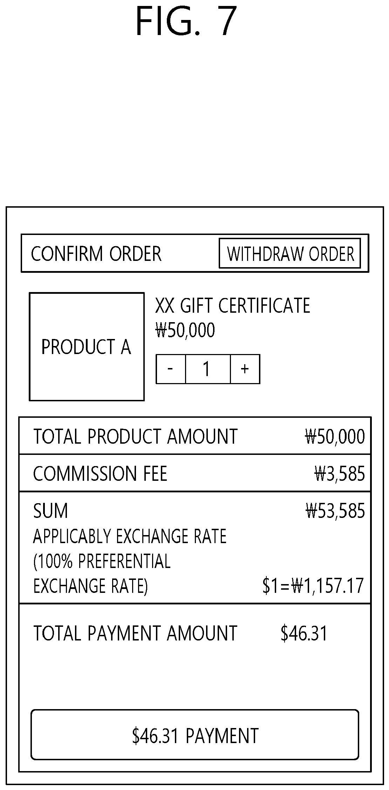

As described above, when the buyer in the first country selects the specific product and then selects "Gift," the screen of the buyer client 30 of the first country is switched to a screen illustrated in FIG. 7 to perform payment for the specific product.

For payment, the service server 10 of the first country uses an overseas payment network to allow the buyer client 30 of the first country to perform payment for the specific product being sold in the second country. The reason why the overseas payment network is used is that, in order for the buyer in the first country to purchase the product of the second country in the first country, an overseas payment network system should be applied for payment.

Referring to FIG. 7, a fee is included in the amount of the specific product. Here, the fee includes all types of fees generated by providing overseas gifting services, such as a broker fee, a currency exchange fee, an overseas payment network usage fee, and the like.

Here, the overseas payment network usage fee is an expense to be paid to an overseas payment network provider when an overseas payment network such as a Visa card, a Master card, or the like is used for overseas payment.

The service server 10 of the first country requests payment for the amount of the specific product in the currency of the first country from the buyer client 30 of the first country, wherein the amount of the specific product is finally determined in consideration of an exchange rate at the time of the payment request.

Referring to FIG. 7, in the case in which the currency of the first country is the United States dollar (USD), the service server 10 of the first country applies a current exchange rate to the amount including the fee for the specific product selected by the buyer in the first country, and provides a final payment amount converted into USD on the screen of the buyer client 30 of the first country.

Before the final payment amount is paid, the buyer in the first country inputs information on a recipient to whom the gift will be sent through the buyer client 30 of the first country. The information on the recipient includes the recipient's name, contact information, or the like.

In an embodiment, before the final payment amount is paid, the buyer in the first country may input a message to be sent with the gift through the buyer client 30 of the first country. Specifically, the buyer in the first country may send a message in the form of a photograph, a video, music, a letter, etc. together with the gift to celebrate a special day such as an anniversary or the like.

Further, in an embodiment, the service server 10 of the first country may provide a notification to the buyer client of the first country when the current exchange rate falls to a predetermined reference value or less. The service server 10 of the first country may use a push notification, a text message, an e-mail, or the like to provide the notification, but a method of providing the notification is not limited. Accordingly, the buyer in the first country may purchase a desired gift at a time point when the exchange rate is good, thereby enabling efficient consumption.

Next, referring to FIG. 2 again, upon payment completion, the service server 10 of the first country makes a request to gift the specific product to the service server 20 of the second country (S 150).

Specifically, the service server 10 of the first country requests gifting of the specific product while providing payment information on the specific product and information on the recipient who will receive the specific product to the service server 20 of the second country. Here, the payment information is payment information on the specific product, and includes information on the buyer in the first country who has purchased the specific product, a brand name of the specific product, a name of the specific product, a payment date, a payment amount, or the like. The information on the recipient is information on a person who will receive the specific product, and includes a name of the recipient, contact information of the recipient, or the like.

In an embodiment, when the buyer in the first country inputs a message, the service server 10 of the first country may provide message information to the service server 20 of the second country to allow the service server 20 of the second country to transmit the message to the recipient in the second country.

Hereinafter, a process in which gifting is completed by the service server 20 of the second country and the recipient client 40 of the second country will be described in terms of the second country.

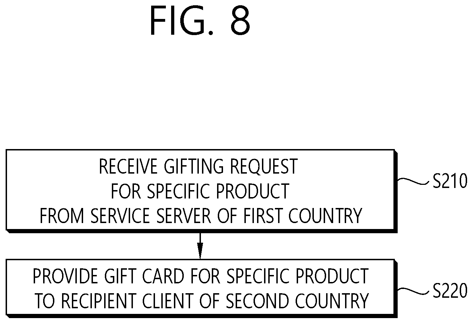

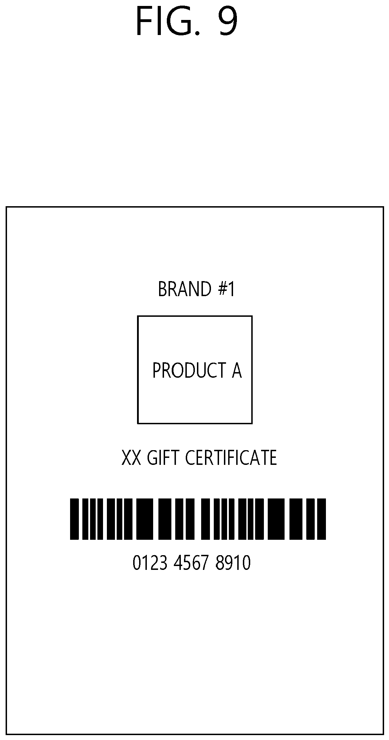

FIG. 8 is a flowchart of a method of providing a gifting service in terms of the second country according to an embodiment of the present invention. FIG. 9 is an exemplary diagram of a screen of a recipient client of the second country according to the embodiment of the present invention.

Referring to FIG. 8, the service server 20 of the second country receives a gifting request for a specific product from the service server 10 of the first country (S210). In this case, as described above, the service server 10 of the first country requests gifting of the specific product while providing payment information on the specific product and the information on the recipient who will receive the specific product to the service server 20 of the second country.

Next, the service server 20 of the second country provides a gift card for the specific product to the recipient client 40 of the second country on the basis of the payment information and the information on the recipient (S220).

In this case, the service server 20 of the second country purchases gift cards for products for each brand in advance, and when the service server 20 of the second country receives the gifting request for the specific product from the service server 10 of the first country, the service server 20 of the second country provides a gift card corresponding to the specific product to the recipient client 40 of the second country.

Specifically, the service provider purchases a predetermined number of gift cards for products for each affiliated brand in advance, and stores related purchase data in the service server 20 of the second country. Thereafter, when the service server 20 of the second country receives a gifting request for the specific product from the service server 10 of the first country, the service server 20 of the second country sends the gift card for the corresponding specific product that is purchased in advance to the recipient in the second country in real time. When the sending is completed, the purchase data for the sent gift card is changed and stored.

In this way, the service server 20 of the second country manages the inventory while updating the purchase data for the gift card for each product, and thus the service server 20 of the second country allows the gift card to be immediately provided to the recipient in the second country as soon as the gifting request is received from the buyer in the first country.

Referring to FIG. 9, the gift card is provided on the screen of the recipient client of the second country, including at least one of information (not illustrated) on the buyer, information on the specific product, and identification information. Here, the identification information may be provided with both a barcode and a serial number as illustrated in FIG. 9, may be provided with either one of the barcode and the serial number, or may be provided in a form different from the barcode and the serial number.

Meanwhile, the service server 10 of the first country and the service server 20 of the second country perform settlement every predetermined period, on the basis of the gifting request made by the service server 10 of the first country to the service server 20 of the second country for the predetermined period.

Specifically, the service server 20 of the second country makes a request for settlement of a total amount to the service server 10 of the first country, on the basis of the payment information received from the service server 10 of the first country for the predetermined period. In this case, the service server 20 of the second country may request settlement at a time point when an exchange rate is good.

For example, in the case in which 100 pieces of payment information are received for a predetermined period (e.g., one month) and the sum of 100 payment amounts is 10,000 USD, the service server 20 of the second country requests a settlement of 10,000 USD.

Then, the service server 10 of the first country checks whether the summed amount is correct based on the payment information stored for the predetermined period, and remits the summed amount to the service server 20 of the second country.

Thereafter, the service server 20 of the second country changes the summed amount remitted from the service server 10 of the first country from the currency of the first country to the currency of the second country.

In this way, by performing the settlement of the plurality of pieces of payment information once every predetermined period, it is possible to save currency exchange fees and remittance fees due to economies of scale. That is, when the settlement is performed for each of 100 pieces of payment information, fees for 100 transactions of remittances and exchanges may be incurred, whereas, when the settlement is performed for the 100 transactions once, remittance and exchange fees for only one transaction may be incurred, resulting in considerable cost savings.

Meanwhile, a buyer residing in a third country (e.g., Australia) may give a gift to a recipient residing in the second country.

In an embodiment, the service provider may also establish a corporation in the third country, and may directly perform a gifting service with the second country through a server (hereinafter, referred to as a service server of the third country) operated by the corresponding corporation. That is, when the service server of the third country receives a gifting request from the buyer residing in the third country, the service server of the third country may request payment for the amount changed into the currency of the third country, and upon payment completion, the service server of the third country may transmit the gifting request for the corresponding product to the service server 20 of the second country to allow the recipient residing in the second country to receive a gift card. Since a process between the third country and the second country is the same as the above-described process between the first country and the second country, a detailed description thereof will be omitted.

In another embodiment, the service server 10 of the first country may receive and process the gifting request generated in the third country. When the gifting service is performed between the third country and the second country, the currency exchange fee is incurred two times because the currency of the first country should be used in order to change the currency of the second country into the currency of the third country. For example, when a buyer residing in Australia (third country) gives a gift to a recipient residing in Korea (second country), the currency of Korea (second country) may be first changed into the currency of the US (first country) and then the currency of the US (first country) may be secondarily changed into the currency of Australia (third country), and thus the buyer residing in Australia may make a payment for a product of Korea in Australian currency.

Therefore, when the gifting request is generated by the buyer in the third country, it is cheaper for the service server 10 of the first country to receive the gifting request and perform payment for the corresponding product in the currency of the first country (because the currency exchange fee is only incurred one time). That is, when the buyer residing in the third country makes a gifting request, it is only necessary to perform one change from the currency of the second country into the currency of the first country without having to make a double currency exchange: currency of the second country→the currency of the first country→the currency of the third country. For example, when the buyer residing in Australia (third country) requests to gift a specific product, a service server 10 in the US (first country) may change the amount for the corresponding product from the currency of Korea (second country) into the currency of the US (first country) to request payment for the product, and upon payment completion, the service server 10 in the US (first country) may request to gift the corresponding product from a service server 20 in Korea (second country) and allow the recipient residing in the second country to receive a gift card.

Therefore, even when the buyer in the third country makes a gifting request, the service server 10 of the first country receives and processes the request, and thus a specific process is as described above.

Meanwhile, operations S 110 to S220 in the above description may be further divided into additional operations or combined into fewer operations in some embodiments of the present invention. Further, some operations may be omitted as necessary, and the order of the operations may be changed.

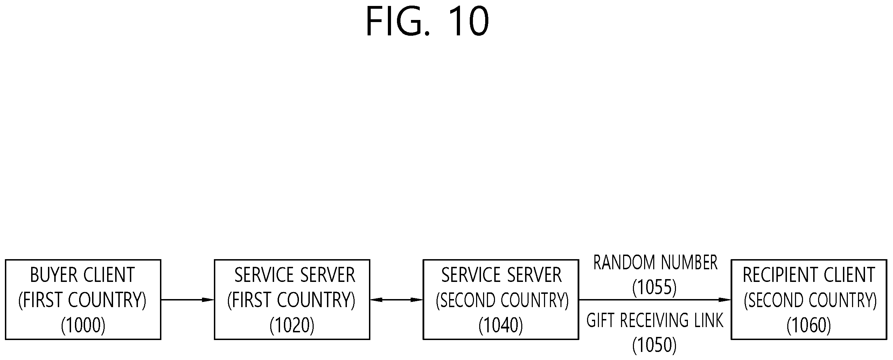

FIG. 10 is a conceptual diagram illustrating a gifting function according to an embodiment of the present invention.

In FIG. 10, a link sharing method of generating a gift receiving link for a gifting function and gifting is disclosed.

Referring to FIG. 10, a gift receiving link 1050 through which a buyer client 1000 of a first country gives a gift to a recipient client 1060 of a second country may be generated.

The recipient client 1060 of the second country may receive the gift through the gift receiving link 1050.

The gift receiving link 1050 may be individually generated for a product so as not to be duplicated, and may be generated based on a random number 1055 so as to be accessible by only a client having information on the random number 1055. Each of a plurality of individual gift receiving links may correspond to a corresponding one of the plurality of products. That is, each of the plurality of gift receiving links may be a unique link generated based on the random number. The uniqueness of the gift receiving link 1050 may be permanently guaranteed, or may be guaranteed only for a guarantee period in which the uniqueness of the gift receiving link 1050 is guaranteed. For example, a random number generation period may be reset based on a specific set time limit, and the specific set time limit may be a guarantee period in which the uniqueness of the gift receiving link 1050 is guaranteed.

The recipient client 1060 of the second country that has received the gift through the gift receiving link 1050 may access the gift receiving link 1050 by separately inputting the random number 1055 provided to the recipient client 1060 of the second country, and obtain the gift card for the product.

In the case in which the gifting function is performed through such a link sharing method, even when a separate SNS channel is not known, it is only necessary to secure a channel through which a link can be transmitted and received, and thus the gifting function may be more easily performed.

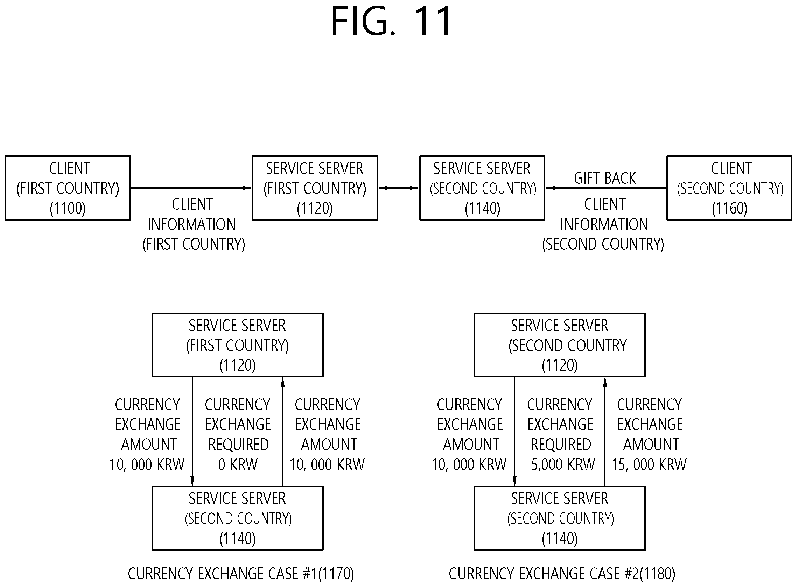

In FIG. 11, an operation between service servers of countries when a gift back function is performed according to an embodiment of the present invention is disclosed.

In FIG. 11, a gift back function in which, after a buyer client of a first country gives a gift to a recipient client of a second country, conversely, the recipient client of the second country gives a gift to the buyer client of the first country is disclosed.

Referring to FIG. 11, in order for the buyer client of the first country to give the gift to the recipient client of the second country, the buyer client of the first country needs to subscribe to a service membership. Information (e.g., name, address, phone number, etc.) on the buyer client of the first country may be stored in a service server of each country through the service membership subscription.

Thereafter, conversely, in order for the recipient client of the second country to give a gift to the buyer client of the first country, the recipient client of the second country may be changed to a buyer client of the second country, and the buyer client of the first country may be changed to a recipient client the first country.

In the case of the gift back, the buyer and the recipient may change, and thus, for convenience of description, the term "client" is unified and will be described instead of the terms "buyer" and "recipient."

For a gift back in which a client 1160 of the second country gives a gift to a client 1100 of the first country, the client 1160 of the second country needs to subscribe to a service membership. Information (e.g., name, address, phone number, etc.) on the client 1160 of the second country may be stored in service servers 1120 and 1140 of the countries through the service membership subscription.

That is, when the gift back function is performed, both the client 1100 of the first country and the client 1160 of the second country can subscribe as users of a service platform.

When the gift back function is performed, information on the client 1100 of the first country is stored in the service servers 1120 and 1140 of the countries, and thus the gifting function may be performed without separately inputting, by the client 1160 of the second country, the information on the client 1100 of the first country.

Further, when the gift back function is performed, it may not be necessary to exchange currencies or it may only be necessary to exchange a partial difference.

Specifically, as in currency exchange case #1 1170, it may be assumed that the amount for the client 1100 of the first country to give a gift to the client 1160 of the second country is 10,000 Korean Republic won (KRW) and the amount for the client 1160 of the second country to give a gift to the client 1100 of the first country is 10,000 KRW.

In this case, there is no need to change from the currency of the first country to the currency of the second country and change from the currency of the second country to the currency of the first country, and thus a gifting service may be provided without a loss caused by an exchange rate, a currency exchange fee, and a remittance fee.

As another example, as in currency exchange case #2 1180, it may be assumed that the amount for the client 1100 of the first country to give a gift to the client 1160 of the second country is 10,000 KRW and the amount for the client 1160 of the second country to give a gift to the client 1100 of the first country is 15,000 KRW. In this case, it is only necessary to exchange the difference of 5,000 KRW, and thus the service may be provided without a loss caused by an exchange rate for the amount corresponding to 10,000 KRW, a currency exchange fee, and a remittance fee.

According to the embodiment of the present invention, when the gift back function is performed, the gifting service may be provided by adding additional benefits in consideration of a currency exchange fee, a remittance fee, or the like.

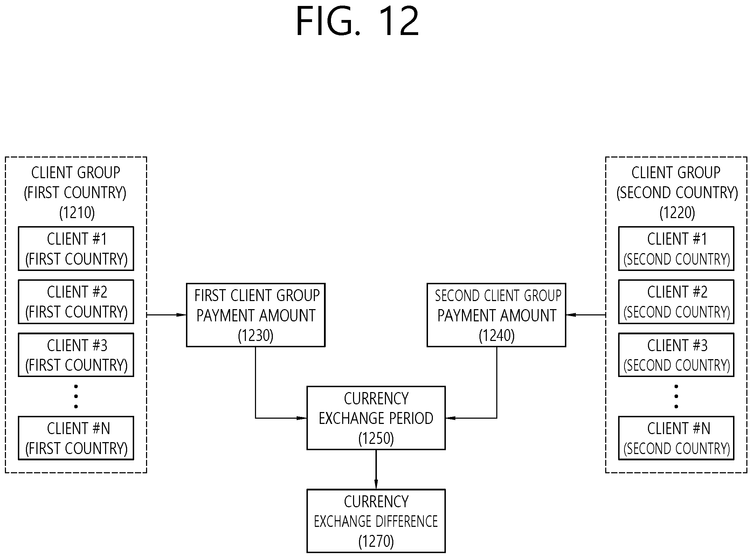

FIG. 12 is a conceptual diagram illustrating a method of performing currency exchange in units of groups when a gifting function is performed according to an embodiment of the present invention.

In FIG. 12, a method of providing a gifting service without a loss caused by an exchange rate, a currency exchange fee, and a remittance fee by minimizing a currency exchange amount when a plurality of clients perform the gifting function between two countries is disclosed.

Referring to FIG. 12, a service server of each country may calculate the amount to be remitted between the countries at a certain time point and may perform only a currency exchange procedure for a difference.

A client group 1210 of a first country may include a plurality of clients of the first country who want to gift from the first country to a second country. A client group 1220 of the second country may include a plurality of clients of the second country who want to gift from the second country to the first country.

The currency exchange procedure may be performed only on a currency exchange difference 1270, which is a difference between a first client group payment amount of the client group 1210 of the first country and a second client group payment amount of the client group 1220 of the second country, on the basis of a currency exchange period 1250, and thus a loss caused by an exchange rate, a currency exchange fee, and a remittance fee may be reduced.

Specifically, when a first client group payment amount of the client group 1210 of the first country that is incurred within a specific currency exchange period (e.g., 1 day) 1250 is 100 million KRW and a second client group payment amount of the client group 1220 of the second country is 150 million KRW, only the difference of 50 million KRW may be processed through a one-way currency exchange procedure. A difference exchanged between the client groups may be expressed as the term currency exchange difference 1270.

According to the embodiment of the present invention, in the currency exchange period 1250, the currency exchange procedure may be performed in units of preset fixed period (e.g., 1 hour or 1 day), but the currency exchange period may be adaptively adjusted by the service server of the country. Further, through a separate payment option, the currency exchange period 1250 for the payment amount of each individual client may be adaptively adjusted according to a selection of the client of each country.

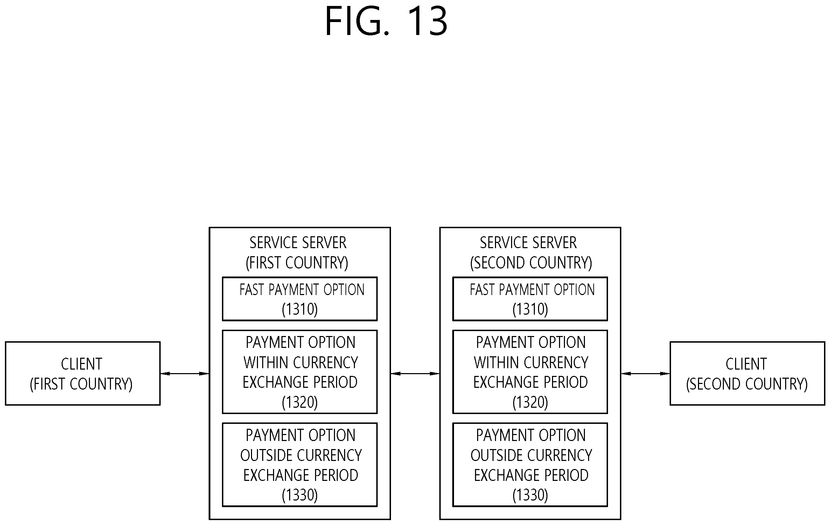

FIG. 13 is a conceptual diagram illustrating a method of setting a currency exchange period according to an embodiment of the present invention.

In FIG. 13, a method of adaptively adjusting, by the service server of a country, the currency exchange period or a method of adaptively adjusting the currency exchange period according to a selection of a client of each country is disclosed.

Referring to FIG. 13, a service server of each country may provide options such as 1) a fast payment option 1310, 2) a payment option 1320 within a currency exchange period, and 3) a payment option 1330 outside the currency exchange period.

### 1) Fast payment option 1310

The fast payment option 1310 may cause a payment to be immediately made at a current exchange rate so that a currency exchange fee and a remittance fee may be incurred. The fast payment option may be selected when the client wants fast processing.

### 2) Payment option 1320 within currency exchange period

In the payment option 1320 within the currency exchange period, a currency exchange fee and a remittance fee may be incurred for a difference between the payment amounts of client groups between countries for the currency exchange period adaptively set between the countries.

In the payment option 1320 within the currency exchange period, the currency exchange period may be determined in consideration of purchase information for each country. The purchase information may include information on a purchase pattern, a purchase amount, and the like. The purchase pattern may be a time when the purchase occurs, and the purchase amount may be the purchase amount generated for a certain period of time.

For example, when a time difference between a first country and a second country is 12 hours, the purchase pattern may have a difference of about 12 hours, and a currency exchange time between the first country and the second country may be set in consideration of the time difference of 12 hours.

Further, when the daily purchase amount of the first country is 1 billion KRW and the daily purchase amount of the second country is 500 million KRW, the currency exchange time between the first country and the second country may be set in consideration of a difference in purchase amount of 500 million KRW.

In addition to the above, the currency exchange time may be determined in additional consideration of a change in exchange rate between countries. When the difference in exchange rate is increased over time, a loss may be caused by the change in exchange rate of the difference as compared to the case of immediate payment even when there is no currency exchange fee or remittance fee. In this case, the currency exchange time may be set to a time point when the first client group payment amount of the client group of the first country and the second client group payment amount of the client group of the second country are within a threshold range by adaptively adjusting the currency exchange time, and thus it is possible to prevent the loss caused by the change in exchange rate.

### 3) Payment option 1330 outside currency exchange period

Further, according to an embodiment of the present invention, when a user selects the payment option 1330 outside the currency exchange period, a payment may be made after the currency exchange period has elapsed, and gains may be generated due to portions corresponding to the currency exchange fee and the remittance fee, and a buffer amount.

For example, when the user wants to give a gift on a specific date (e.g., birthday or Christmas) outside the currency exchange period, the user may select the payment option 1330 outside the currency exchange period and may make the gift available on the specific date.

When the payment option 1330 outside the currency exchange period is selected, the service server of each country may use the amount corresponding to the payment option 1330 outside the currency exchange period as the buffer amount to reduce the difference when a difference between the payment amounts of the countries occurs within the currency exchange period.

Specifically, when the first client group payment amount of the client group of the first country that is incurred within the specific currency exchange period (e.g., 1 day) is 100 million KRW and the second client group payment amount of the client group of the second country is 150 million KRW, a difference therebetween may be 50 million KRW. In this case, when the buffer amount selected as the payment option outside the currency exchange period of the clients of the first country is 70 million KRW, 50 million KRW among 70 million KRW may be used in addition to the first client group payment amount.

In this case, since 150 million KRW, which is obtained by adding 100 million KRW of the first client group payment amount and 50 million KRW of the buffer amount, is equal to the second client group payment amount of 150 million KRW, the currency exchange procedure may not be required.

When the payment option outside the currency exchange period is selected according to the amount contributed to the buffer amount, the gains from currency exchange may be increased by utilizing the buffer amount.

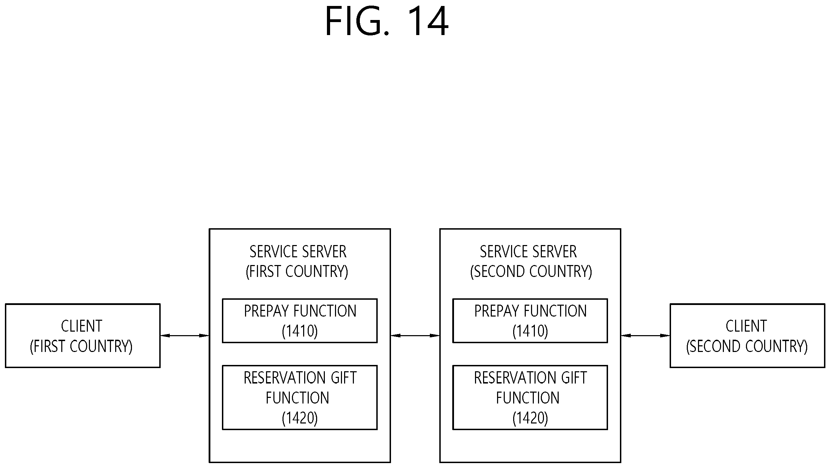

FIG. 14 is a conceptual diagram illustrating a prepay function and a reserved delivery function according to an embodiment of the present invention.

In FIG. 14, a prepay function 1410 for prepayment of a gift in consideration of an exchange rate and a reservation gift function 1420 for delivery in consideration of various anniversaries or time differences are disclosed.

Referring to FIG. 14, the prepay function 1410 is a function for making a payment in advance. When the exchange rate falls to a specific exchange rate or less, by the payment option outside the currency exchange period, the prepay function 1410 may make a payment or give an alarm so that the client makes a payment at the specific exchange rate or less.

In the case in which a separate period is not set when the prepay function 1410 is used, payment may be performed only when the exchange rate falls to the set exchange rate or less. Conversely, in the case in which the separate period is set when the prepay function 1410 is used, when the exchange rate does not fall to the exchange rate or less set within the corresponding period, payment may be performed during the set period.

A service server of each country may present a possible range of exchange rate depreciation in advance on the basis of exchange rate fluctuation data according to a payment deadline set by the user. The client may set the exchange rate for the prepay function 1410 with reference to the range of exchange rate depreciation.

Further, it is possible to give a gift in consideration of a time difference and a specific date through the reservation gift function 1420. The payment option outside the currency exchange period described above may correspond to reserved delivery so that gains may be generated based on the buffer amount due to the predelivery reservation.

In the case in which the time difference between the countries is large, when the client of the first country makes a payment for the gift during the day, the gift may be delivered to the client of the second country at night. When an alarm is transmitted through a mobile terminal of the client of the second country, the alarm may disturb the sleep of the client of the second country. Therefore, through the reservation gift function, in consideration of the time difference, the service server may allow the client to separately make a reservation for a delivery time of the country to which the client wants to give the gift. In addition, by providing anniversaries or vacation related information of the second country to which the client wants to give a gift, the client of the first country may give the reserved gift in consideration of anniversaries, holidays, etc. of the second country.

The method of providing a gifting service between a first country and a second country according to the embodiment of the present invention described above may be implemented as a program (or an application) to be executed in combination with the server, which is hardware, and may be stored in a computer-readable recording medium.

In order for a computer to read the program and execute the above methods implemented as programs, the above-described program may include code coded in a computer language such as C, C++, JAVA, Ruby, or machine language that may be read by a processor (a central processing unit (CPU)) of the computer through a device interface of the computer. The code may include functional code related to functions that define necessary functions for executing the methods, and the like and include control code related to an execution procedure necessary for the processor of the computer to execute the functions according to a predetermined procedure. Further, the code may further include additional information required for the processor of the computer to execute the functions, or code related to memory reference to which a location (address) of an internal or external memory of the computer should be referenced. Further, when the processor of the computer needs to communicate with any other computer or server at a remote location in order to execute the functions, the code may further include code related to communication for how to communicate with any other computers or servers at remote locations using a communication module of the computer and for what information or media should be transmitted and received during communication.

The storage medium is not a medium in which data is stored for a short moment, such as a register, a cache, a memory, etc., but refers to a medium in which data is stored semi-permanently and is readable by a device. Specifically, examples of the storage medium include a read only memory (ROM), a random-access memory (RAM), a compact disc ROM (CD-ROM), a magnetic tape, a floppy disk, an optical data storage device, and the like, but the present invention is not limited thereto. That is, the program may be stored in various recording media on various servers which the computer may access or may be stored in various recording media of the user's computer. Further, the media may be distributed over computer systems connected through a network, and computer-readable code may be stored in a distributed manner.

While the embodiments of the present invention have been described with reference to the accompanying drawings, it will be understood by those skilled in the art that various modifications can be made without departing from the technical scope of the present invention and without changing essential features. Therefore, the above-described embodiments should be considered in a descriptive sense only and not for purposes of limitation.

## Claims

1. A method of providing a gifting service between a first country and a second country, which is performed by a computer, the method comprising:
receiving, by a service server of a first country, a gifting request from a buyer client of the first country;
providing, by the service server of the first country, a plurality of product lists for each brand to the buyer client of the first country;
receiving, by the service server of the first country, a selection of a specific product from among the plurality of product lists from the buyer client of the first country;
making, by the service server of the first country, a request for payment for the specific product to the buyer client of the first country; and
upon completion of the payment, making , by the service server of the first country, a request to gift the specific product to a service server of the second country,
wherein the service server of the first country and the service server of the second country perform settlement every predetermined period, on the basis of the gifting request made by the service server of the first country to the service server of the second country for the predetermined period.

2. The method of claim 1, wherein, in the making of the request for the payment for the specific product, the service server of the first country makes a request for payment in a currency of the first country for the amount of the specific product being sold in the second country to the buyer client of the first country, and
the amount of the specific product is determined in consideration of an exchange rate at a time point when the payment is requested.

3. The method of claim 1, wherein the service server of the first country uses an overseas payment network to allow the buyer client of the first country to perform payment for the specific product being sold in the second country.

4. The method of claim 1, wherein the making of the request to gift the specific product includes providing, by the service server of the first country, information on the payment for the specific product and information on a recipient who will receive the specific product to the service server of the second country.

5. The method of claim 1, wherein the service server of the first country provides a notification to the buyer client of the first country when a current exchange rate falls to a predetermined reference value or less.

6. A method of providing a gifting service between a first country and a second country, which is performed by a computer, the method comprising:
receiving, by a service server of a second country, a gifting request for a specific product together with information on payment for the specific product and information on a recipient who will receive the specific product from a service server of a first country; and
providing, by the service server of the second country, a gift card for the specific product to a recipient client of the second country, on the basis of the information on the payment and the information on the recipient,
wherein the service server of the first country and the service server of the second country perform settlement every predetermined period, on the basis of the gifting request made by the service server of the first country to the service server of the second country for the predetermined period.

7. The method of claim 6, further comprising:
when the settlement is performed, making , by the service server of the second country, a request for remittance for a total amount to the service server of the first country, on the basis of the plurality of pieces of information on payment received from the service server of the first country for the predetermined period; and
changing, by the service server of the second country, the total amount remitted from the service server of the first country from a currency of the first country into a currency of the second country.

8. The method of claim 6, wherein the service server of the second country purchases gift cards of products for each brand in advance, and when the service server of the second country receives the gifting request for the specific product from the service server of the first country, provides a gift card corresponding to the corresponding specific product to the recipient client of the second country.

9. A computer program which is combined with a computer and is stored in a computer-readable recording medium to execute the method of providing the gifting service between the first country and the second country according to any one claim of claims 1 to 8.

10. A system for providing a gifting service between a first country and a second country, the system comprising:
a service server of a first country, which is configured to provide a plurality of product lists for each brand to a buyer client of the first country, receive a gifting request for a specific product selected from among the plurality of product lists, make a request for payment for the specific product to the buyer client of the first country, and upon completion of the payment, request gifting of the specific product; and
a service server of a second country, which is configured to receive the gifting request for the specific product from the service server of the first country and provide a gift card for the specific product to a recipient client of the second country on the basis of information on the payment and information on a recipient,
wherein the service server of the first country uses an overseas payment network to allow the buyer client of the first country to perform payment for the specific product being sold in the second country,
the service server of the second country purchases gift cards of products for each brand in advance, and when the service server of the second country receives the gifting request for the specific product from the service server of the first country, provides a gift card corresponding to the corresponding specific product to the recipient client of the second country, and
the service server of the first country and the service server of the second country perform settlement every predetermined period, on the basis of the gifting request made by the service server of the first country to the service server of the second country for the predetermined period.
